# FASCICULE DE BREVET EUROPEEN

(11) **EP 4 184 154 B1**
(45) Date de publication et mention de la délivrance du brevet: **01.01.2025**
(21) Numéro de dépôt: 22208969.0
(22) Date de dépôt: 23.11.2022
(51) Int. Cl.: G01N 23/2251, G01N 23/20091, G01N 23/20058, G06V 10/44, G06V 20/69

(54) **PROCÉDÉ D'INDEXATION DES MOTIFS ATOMIQUES D'UNE STRUCTURE CRISTALLINE ET PRODUIT PROGRAMME D'ORDINATEUR**
VERFAHREN ZUR INDEXIERUNG ATOMARER MUSTER EINER KRISTALLINEN STRUKTUR UND COMPUTERPROGRAMMPRODUKT
METHOD FOR INDEXING ATOMIC PATTERNS OF CRYSTAL STRUCTURE AND COMPUTER PROGRAM PRODUCT

(30) Priorité: 23.11.2021 FR 2112391
(43) Date de publication de la demande: 24.05.2023
(73) Titulaire: Commissariat à l'Energie Atomique et aux Energies Alternatives, 75015 Paris (FR)
(72) Inventeur: QUEMERE, Patrick, 38054 Grenoble Cedex 9 (FR)
(74) Mandataire: Lavoix

(56) Documents cités:
- KABSCH WOLFGANG: "Integration, scaling, space-group assignment and post-refinement", ACTA CRYSTALLOGRAPHICA SECTION D, vol. 66, no. 2, 1 February 2010 (2010-02-01), pages 133 - 144, XP055934903, ISSN: 0907-4449, DOI: 10.1107/S0907444909047374
- ZENG ET AL: "Automatic lattice determination for two-dimensional crystal images", JOURNAL OF STRUCTURAL BIOLOGY, ACADEMIC PRESS, UNITED STATES, vol. 160, no. 3, 15 November 2007 (2007-11-15), pages 353 - 361, XP022346085, ISSN: 1047-8477, DOI: 10.1016/J.JSB.2007.08.008
- LOTITO VALERIA ET AL: "Pattern detection in colloidal assembly: A mosaic of analysis techniques", ADVANCES IN COLLOID AND INTERFACE SCIENCE, vol. 284, 1 October 2020 (2020-10-01), NL, pages 102252, XP055934841, ISSN: 0001-8686, DOI: 10.1016/j.cis.2020.102252

## Description

La présente invention concerne un procédé d'indexation des motifs atomiques d'une structure cristalline. Le domaine de l'invention est celui du traitement d'images de microscopie et l'invention est assimilée à un procédé de traitement d'image.

Afin par exemple d'étudier les contraintes qui s'exercent dans une structure cristalline à partir d'images de cette structure, un repérage précis des atomes les uns par rapport aux autres dans l'espace doit être réalisé au moyen d'une pluralité d'indices, chaque indice se rapportant à l'une des directions cristallographiques principales de la structure cristalline. Un tel repérage est dénommé « indexation » du cristal. Un exemple d'algorithme d'indexation est donné dans le document "Intégration, scaling, space-group assignment and post-refinement", KABSCH W., Acta Ccrystallographica Section D, vol. 66, no. 2, 1 février 2010 (2010-02-01), pages 133-144.

On connaît aussi un algorithme permettant de réaliser une indexation automatique des atomes d'une structure cristalline. Par exemple, pour une structure bidimensionnelle, les vecteurs directeurs A̅ et B̅ caractérisant les directions cristallographiques principales du matériau à étudier sont d'abord déterminés par une procédure d'analyse de phase géométrique - GPA (« Geometrical phase analysis » en anglais), selon laquelle l'image résultant de l'illumination d'un échantillon est transposée de l'espace physique vers l'espace réciproque (Transformation de Fourier spatiale) afin d'identifier les vecteurs A̅ et B̅. Une fois les vecteurs A̅ et B̅ connus, en repassant dans l'espace physique, l'indexation est réalisée suivant une procédure de minimisation de la distance entre la position réelle d'un atome à indexer et celle d'un noeud d'un maillage régulier construit à partir des vecteurs A̅ et B̅. Les indices [i, j] selon les directions principales définies par les vecteurs A̅ et B̅ de l'atome sont alors ceux du noeud le plus proche.

Ce procédé de l'état de la technique est fondé sur une procédure GPA qui reste complexe à mettre en oeuvre et qui ne donne pas forcément de bon résultats pour tout type de structure cristalline.

Mais surtout, il s'agit finalement d'un algorithme de recherche du plus proche voisin qui est un algorithme en n², où n désigne le nombre d'atomes à indexer. Il s'agit par conséquent d'un coût algorithmique élevé.

Enfin, le fait de comparer la structure réelle à un maillage régulier peut conduire à des erreurs d'indexation, par exemple lorsqu'une direction principale du matériau est courbée sous l'effet d'une déformation ou encore lorsque le cristal comporte des irrégularités.

Le but de la présente invention est de résoudre ces problèmes.

Pour cela l'invention a pour objet un procédé d'indexation des motifs atomiques d'une structure cristalline, caractérisé en ce que le procédé comprend les étapes : d'acquisition d'une image de la structure cristalline, ladite image représentant une pluralité de motifs atomiques ; de traitement de l'image acquise pour obtenir un ensemble de points, chaque point de l'ensemble de points étant associé à un motif atomique de l'image acquise et chaque point de l'ensemble de points étant localisé dans un repère de référence ; d'application d'un algorithme de triangulation à l'ensemble de points pour obtenir un maillage triangulaire, chaque sommet d'un triangle du maillage triangulaire étant un point de l'ensemble de points, un point particulier de l'ensemble de points étant connecté à un point dit voisin dudit point particulier par un côté d'un triangle ; de détermination des vecteurs directeurs A̅ et B̅ de la structure cristalline à partir des propriétés des triangles du maillage triangulaire, un vecteur directeur définissant une direction principale de la structure cristalline, un indice étant associé à chaque direction principale ; et d'indexation de chaque point de l'ensemble de points, par itérations successives à partir d'un point sélectionné comme point origine et dont les indices selon chacune des directions principales sont nuls, en sélectionnant un point indexé à l'itération précédente comme point central, en vérifiant si un point voisin dudit point central correspond à une translation du point central selon un vecteur de translation égal à l'un des vecteurs directeurs, respectivement à l'un de leurs opposés, et, dans l'affirmative, incrémenter, respectivement décrémenter, l'indice du point central selon la direction principale associée au vecteur de translation pour indexer ledit point voisin à partir des indices du point central.

Suivant des modes particuliers de réalisation, le procédé comporte une ou plusieurs des caractéristiques suivantes, prises isolément ou suivant toutes les combinaisons techniquement possibles :
- l'algorithme de triangulation est un algorithme de triangulation de Delaunay.
- l'étape de détermination des vecteurs directeurs de la structure cristalline à partir des propriétés des triangles du maillage triangulaire comporte l'application d'un traitement statistique sur les angles et les longueurs des triangles du maillage triangulaire.
- le traitement statistique comporte une estimation des angles des vecteurs directeurs à partir d'un histogramme des angles de chaque côté des triangles du maillage triangulaire, puis une estimation de la longueur de chaque vecteur directeur à partir d'un histogramme des longueurs de chaque côté des triangles du maillage triangulaire dont les angles sont proches de l'angle estimé pour le vecteur directeur considéré.
- le procédé comporte une étape d'application, sur l'ensemble de points, d'une transformation géométrique permettant de passer d'un repère défini par les vecteurs directeurs A̅ et B̅ de la structure cristalline à un repère défini par des vecteurs orthonormés I̅ et J̅, afin d'obtenir un ensemble de points transformés.
- un point d'un ensemble de points est caractérisé par un identifiant unique, une pluralité de coordonnées spatiales, et, à l'issue de la mise en oeuvre du procédé d'indexation, une pluralité d'indices.
- tous les points de l'ensemble de points appartiennent à un même plan XY, la structure cristalline possédant deux directions principales, c'est-à-dire deux vecteurs directeurs.
- l'étape consistant à traiter l'image acquise s'effectue par application d'un traitement de correspondance de modèle - « template matching » permettant d'obtenir une valeur de corrélation entre l'image acquise et une vignette représentative d'un motif atomique pour différentes positions relatives de la vignette sur l'image acquise, chaque maximum local de la valeur de corrélation correspondant à un point de l'ensemble de points.
- l'acquisition de l'image s'effectue par microscopie électronique par transmission, comme par exemple les techniques HAADF-STEM, STEM, EDS, EDX, EELS , ou par microscopie à effet tunnel - STM.

L'invention a également pour objet un produit programme d'ordinateur comportant des instructions logicielles qui, lorsqu'elles sont exécutées par un ordinateur, mettent en oeuvre le procédé précédent.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
- La figure 1 est une image d'un échantillon d'une structure cristalline sur laquelle est appliquée une procédure de « Template Matching » permettant d'obtenir un fichier de points ;
- La figure 2 est une représentation dans un repère de l'image, d'une fonction de corrélation, d'un fichier de points et d'un maillage triangulaire correspondant à l'image de la figure 1 ;
- La figure 3 est un histogramme des angles des triangles du maillage triangulaire de la figure 2 permettant la détermination des angles des vecteurs directeurs de la structure cristalline ;
- La figure 4 est une représentation dans un repère orthonormé du fichier de points de la figure 2 une fois indexé ;
- La figure 5 est une représentation sous forme de blocs d'un mode de réalisation du procédé d'indexation selon l'invention ; et,
- La figure 6 est une représentation sous forme de blocs d'un mode de réalisation de la procédure d'indexation du procédé de la figure 5.

Dans la présente description, pour des raisons de clarté de l'exposé, le cas d'une structure cristalline à deux dimensions - 2D est plus particulièrement présenté, mais l'invention s'applique au cas d'une structure cristalline à trois dimensions - 3D.

Par motif atomique, on entend un motif élémentaire répété dans l'espace, ce motif élémentaire comportant un ou plusieurs atome(s). Lorsqu'il comporte plusieurs atomes, ceux-ci peuvent être associés pour former une molécule, ou peuvent être indépendants. C'est par exemple le cas d'un atome métallique piégé au centre d'une maille cristalline définie par plusieurs atomes. Le motif atomique qu'il est alors pertinent d'indexer est l'ensemble formé de cette maille cristalline et de cet atome métallique.

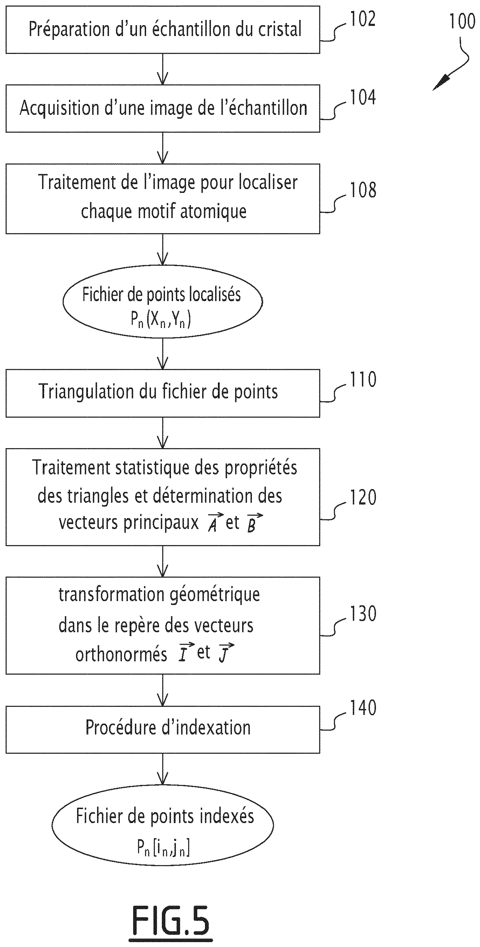

Un mode de réalisation préféré du procédé d'indexation est représenté sur la figure 5.

Le procédé d'indexation selon l'invention fait appel à un ensemble de points, dont chaque point correspond à un motif atomique de la structure cristalline à étudier. Dans ce qui suit, les étapes préparatoires permettant d'obtenir un tel ensemble de points sont présentées. Ces étapes préparatoires font partie du procédé d'indexation selon l'invention.

Ainsi, le procédé d'indexation 100 débute par une étape préparatoire 102, au cours de laquelle un technicien prépare un échantillon d'un matériau cristallin à étudier. L'échantillon est préparé de sorte que sa surface corresponde à un plan de coupe caractéristique du cristal.

Dans ce plan de coupe, définis par les deux directions X et Y, le motif atomique du cristal est répété selon deux directions privilégiées, dites principales, du cristal. A chaque direction principale est associée un indice. C'est selon chacune de ces directions principale qu'il convient d'attribuer une paire d'indice, [i,j], à un motif atomique.

L'échantillon préparé est ensuite imagé de manière à obtenir une image du matériau cristallin dans le plan de coupe XY.

Le procédé d'indexation 100 se poursuit par une étape 104 d'acquisition d'une image de la surface de l'échantillon à étudier. De préférence, cette étape met en oeuvre d'une technique d'imagerie telle que la microscopie électronique par transmission champ sombre annulaire à grand angle - HAADF-STEM (« High-angle annular dark-field imaging - Scanning Transmission Electron Microscopy »).

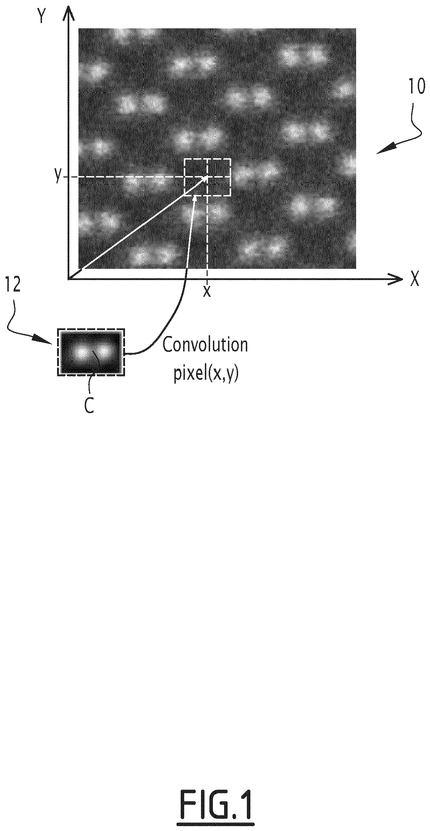

La Figure 1 illustre une image 10 d'une portion d'un échantillon de cristal obtenue par la technique HAADF-STEM.

En variante, d'autres techniques d'imagerie sont envisageables pour obtenir une image du matériau cristallin, telles que par exemple :
- la microscopie électronique par transmission - TEM (« Transmission Electron Microscopy »), en particulier la microscopie électronique par transmission à balayage - STEM (« Scanning Transmission Electron Microscopy »), dont la technique HAADF-STEM est une déclinaison, éventuellement associée à une technique de spectroscopie à rayons X à dispersion d'énergie - EDS ou EDX (« Energy Dispersive X-Ray Spectroscopy »), ou encore une technique de spectroscopie de perte d'énergie électronique - EELS (« electron energy loss spectroscopy ») ;
- la microscopie à effet tunnel - STM («scanning tunneling microscope »).

Le procédé 100 comporte ensuite une étape 108 consistant à traiter l'image obtenue afin d'associer à chaque motif atomique visible sur l'image, un point localisé. L'ensemble des points obtenus est avantageusement stocké dans un fichier de points.

Est par exemple mis en oeuvre un traitement de correspondance de modèle, ou « Template Matching » en anglais. La mise en correspondance de modèle est une technique classique en traitement d'images numériques permettant de retrouver, dans une image, des parties de cette image qui ressemblent à une vignette modèle.

Pour traiter l'image 10, on définit ainsi une vignette 12. Elle présente un centre C.

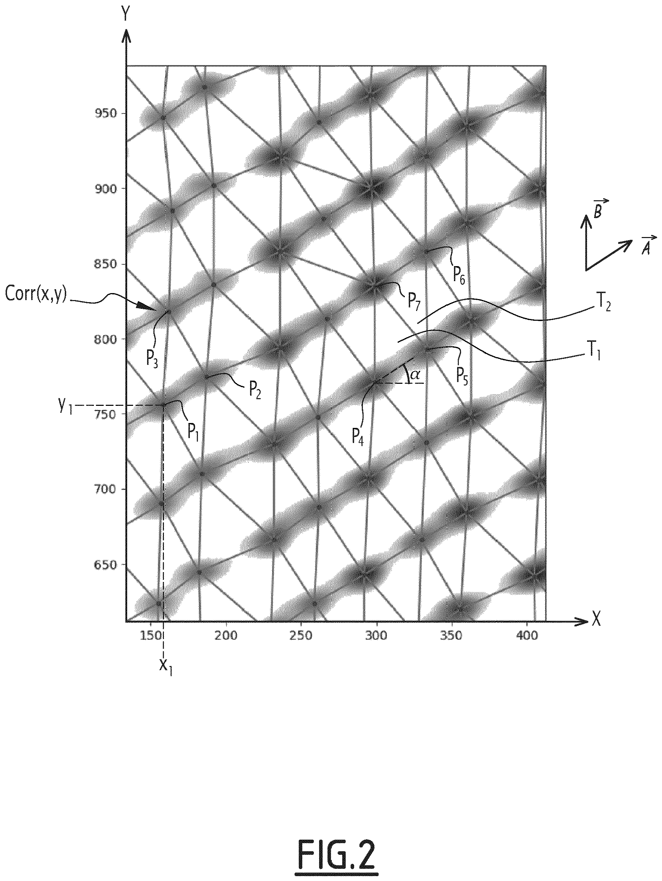

On réalise alors une opération de convolution de l'image 10 avec la vignette 12 alors que son centre C est placé au point de coordonnées (x, y) de l'image 10. En répétant la convolution pour différents points de l'image 10, on obtient une mesure de la corrélation, Corr(x,y), de l'image 10 et de la vignette 12 pour chaque point (x, y) dans le plan XY. Cette mesure de corrélation est représentée sur la figure 2 en niveaux de gris.

Puis, on recherche les différents maximum locaux de la mesure de corrélation Corr(x,y). A chaque identification d'un maximum local, un nouveau point est entré dans le fichier de points.

Ce point reçoit un identifiant unique. Il est localisé avec les coordonnées de positions (x, y) du maximum local correspondant.

On obtient ainsi un fichier de points qui comporte N points Pₙ, identifiés par l'entier n.

Par exemple, sur la figure 2, le premier point P₁ du fichier est localisé à la position x₁ selon la direction X et y, selon la direction Y.

Il est à noter que la position d'un point est donnée dans un repère de référence de l'image.

Puis, dans une étape 110, un algorithme de triangulation est appliqué sur l'ensemble des points du fichier de points, pour obtenir un maillage triangulaire.

Une triangulation d'un ensemble de points dans un plan permet de recouvrir ce plan d'une pluralité de triangles adjacents, de sorte que tous les points de l'ensemble de points constituent les sommets de ces triangles. Un second point est dit voisin d'un premier point, lorsque ces deux points sont connectés par le côté d'un triangle.

Avantageusement, une triangulation de Delaunay est appliquée qui a pour conséquence d'éviter d'avoir des triangles présentant des angles trop ouverts (i.e. des triangles trop aplatis).

Ainsi, comme illustré sur la figure 1, les points P₄, P₅, et P₇ constituent les sommets d'un triangle T₁ et les points P₅, P₆, et P₇ constituent les sommets d'un triangle T₂.

En variante, d'autres types de triangulation peuvent être mis en oeuvre.

Dans l'étape suivante, 120, le maillage triangulaire est analysé par application d'un traitement statistique adapté.

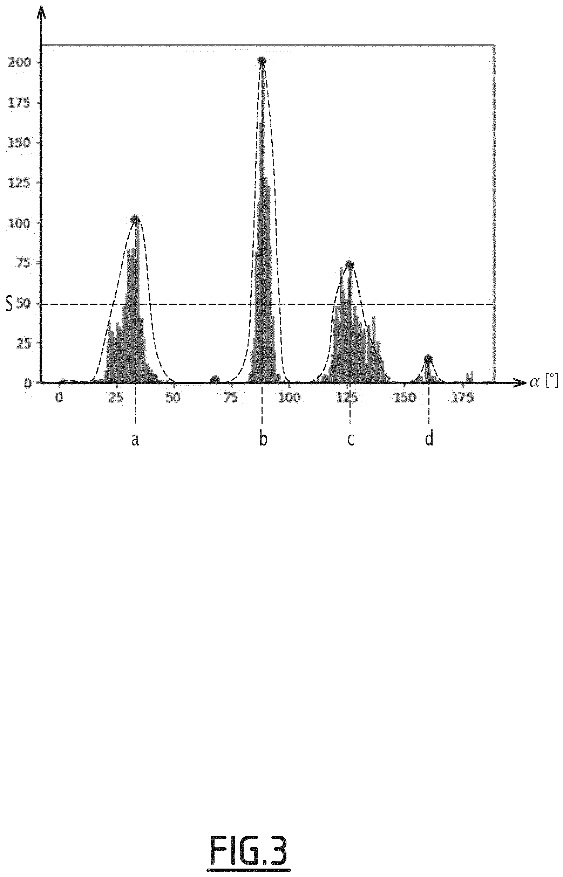

Par exemple, comme représenté sur la figure 3, un histogramme des angles α que forme chaque côté d'un triangle avec la direction X est construit. Puis, une fonction gaussienne est ajustée à chaque pic de cet histogramme qui dépasse un seuil prédéterminé S.

Sur la figure 3, le seuillage permet d'éviter de considérer l'accumulation d'angles autour de la valeur d, qui est due à des triangles présentant un angle ouvert.

La valeur du maximum de chaque gaussienne donne une valeur d'angle. Par exemple, sur la figure 3 on obtient trois valeurs angles a (environ 35°), b (environ 90°) et c (environ 125°).

Parmi ces angles, on isole les deux angles a et b des deux vecteurs directeurs A̅ et B̅ du matériau cristallin (l'angle c n'étant que l'angle complémentaire à 180° des angles a et b).

On réalise ensuite un histogramme des longueurs des côtés des triangles du maillage qui font un angle proche de l'angle a avc la direction X. Parmi les longueurs les plus probables, on isole la longueur mod(A̅) du vecteur directeur A̅. De manière similaire, on réalise ensuite un histogramme des longueurs des côtés des triangles du maillage qui font un angle proche de l'angle b avc la direction X. Parmi les longueurs les plus probables, on isole la longueur mod(B̅) du vecteur directeur B̅ du matériau cristallin.

En variante, l'ensemble des triangles de la triangulation est analysé de manière à construire un histogramme des angles des côtés des triangles. Puis, un algorithme de détection des maxima est appliqué sur l'histogramme pour détecter la liste des angles associés à des pics (avantageusement une distance d'au moins 10° est imposée entre deux pics consécutifs). En tenant compte des contraintes sur les angles d'un triangle, on récupère deux valeurs d'angles de cette liste d'angles (ici par exemple 88° et 33°). Puis, deux populations de côtés sont définies, la première regroupant les côtés faisant un angle de 88°±10° avec la direction de référence X et la seconde regroupant les côtés faisant un angle 33°±10° avec la direction de référence X (la tolérance sur la valeur d'un angle étant ajustable). Pour chacune de ces deux populations successivement et indépendamment, sont ensuite calculés un angle moyen et une longueur moyenne des côtés. Ce qui donne, pour la première population, l'angle et à la longueur du vecteur directeur A̅ (a = 89,09 et mod(A̅) = 79,85) et, pour la seconde population, l'angle et à la longueur du vecteur directeur B̅ (b = 31,49 et mod(B̅) = 40,80).

Ainsi, à l'issue de l'étape 120, on obtient un premier vecteur directeur A̅ et un second vecteur directeur B̅. Ils portent chacun une information d'orientation du cristal dans le plan XY, et de pas entre deux motifs du cristal consécutif lorsqu'on se déplace soit selon la première direction principale définie au premier vecteur A̅, soit selon la seconde direction principale définie par le second vecteur B̅.

Avantageusement, pour simplifier l'étape d'indexation 140 à suivre, une étape 130 est mise en oeuvre consistant à appliquer une transformation géométrique sur le fichier de points pour passer du plan XY dans lequel le cristal est orienté selon les vecteurs directeurs A̅ et B̅ dans un plan X'Y' dans lequel le cristal est orienté selon des vecteurs orthonormés I̅ et J̅.

Il s'agit donc d'une transformation géométrique du plan permettant de passer de la base des vecteurs A̅ et B̅ dans la base des vecteurs I̅ et J̅.

L'application de cette transformation géométrique au fichier de points permet d'obtenir un fichier transformé de points dans lequel la position de chaque point est maintenant exprimée avec des coordonnées selon les directions X' et Y'.

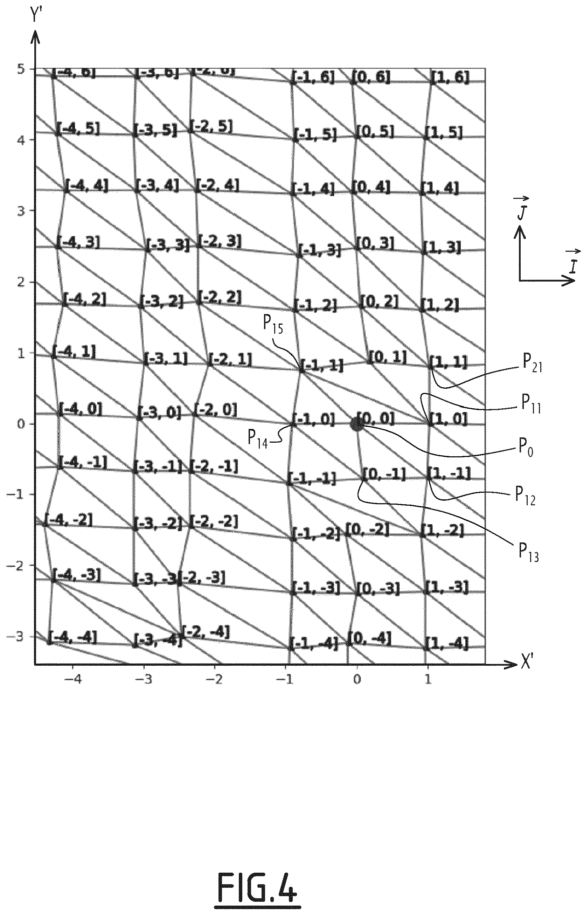

Le fichier transformé est représenté sur la figure 4. Les points sont sensiblement alignés avec les directions X' et Y'. Les points sont sensiblement espacés les uns des autres selon la direction X' ou selon la direction Y' d'un pas unité.

L'étape 140 est l'étape d'indexation proprement dite des points du fichier, de préférence transformé.

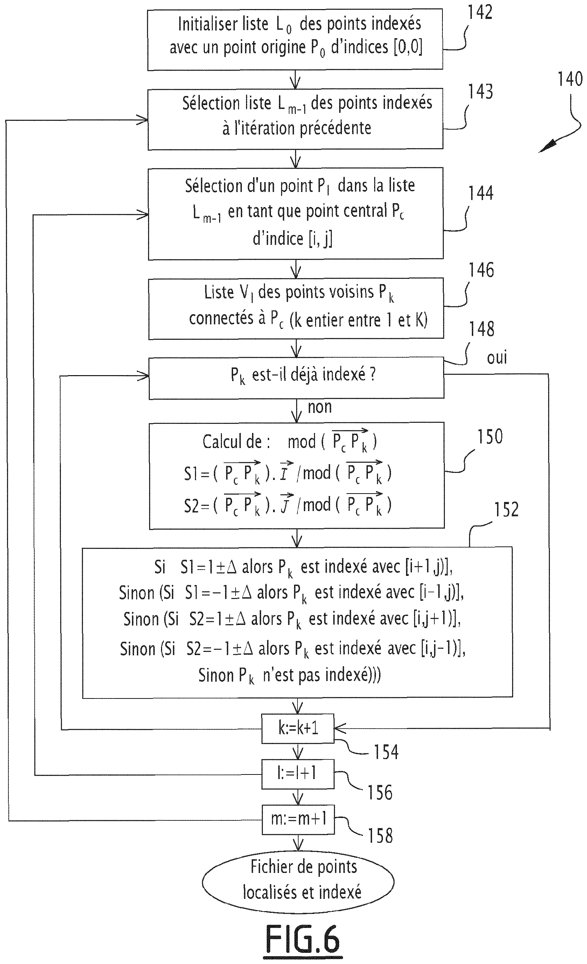

Un mode de réalisation préféré de cette étape d'indexation est illustré sur la figure 6.

L'étape 142 est une étape d'initialisation, notamment d'une liste de points indexés à l'itération m, Lₘ. Pour m=0, L₀ est initialisée avec un point quelconque du fichier transformé, ce point constituant le point origine P₀ indexé par la paire d'indices [0, 0]. Le point P₀ est représenté sur la figure 4.

A l'étape 143, pour l'itération courante m, on sélectionne la liste Lₘ₋₁ des points indexés à l'itération précédente m-1. A la première itération, la liste L₀ comporte uniquement le point origine P₀.

A l'étape 144, est sélectionné un point Pₗ de la liste Lₘ₋₁ en tant que point central P_{c} (l entier entre 1 et L, où l est le nombre total de points dans la liste Lₘ₋₁ ) Le point central a été indexé par la paire d'indices [i, j].

A l'étape 146, est déterminée la liste Vₗ des points voisins Pₖ du point central P_{c} (k entier entre 1 et K, où K est le nombre total de points voisins). Un point voisin du point central est un point connecté au point central par le côté d'un triangle du maillage triangulaire.

Pour chaque point voisin Pₖ de la liste Vₗ, on vérifie à l'étape 148 si ce point n'a pas déjà été indexé.

Dans l'affirmative, la procédure passe à l'étape 154.

Dans la négative, l'étape 150 permet de calculer les grandeurs pertinentes suivantes :
- mod(P̅_̅{̅c̅}̅P̅ₖ̅), qui est la distance entre les points P_{c} et Pₖ évaluée dans le plan X'Y';
- S1 = P̅_̅{̅c̅}̅P̅ₖ̅.I̅/mod(P̅_̅{̅c̅}̅P̅ₖ̅), qui dépend de l'angle entre le vecteur P̅_̅{̅c̅}̅P̅ₖ̅ et le vecteur I̅ ; et,
- S2 = P̅_̅{̅c̅}̅P̅ₖ̅.J̅/mod(P̅_̅{̅c̅}̅P̅ₖ̅), qui dépend de l'angle entre le vecteur P̅_̅{̅c̅}̅P̅ₖ̅ et le vecteur J̅.

Puis, à l'étape 152, on détermine si le vecteur P̅_̅{̅c̅}̅P̅ₖ̅ est proche :
- du vecteur I̅, c'est-à-dire si S1 est proche de 1, et alors on incrémente l'indice i du point central P_{c} d'une unité, et le point voisin Pₖ est indicé par [i+1, j] ; ou
- du vecteur -I̅, c'est-à-dire si S1 est proche de -1, et alors on décrémente l'indice i du point central P_{c} d'une unité, et le point voisin Pₖ est indicé par [i-1, j] ; ou
- du vecteur J̅, c'est-à-dire si S2 est proche de 1, et alors on incrémente l'indice j du point central P_{c} d'une unité, et le point voisin Pₖ est indicé par [i, j+1] ; ou
- du vecteur -J̅, c'est-à-dire si S2 est proche de -1, et alors on décrémente l'indice j du point central P_{c} d'une unité, et le point voisin Pₖ est indicé par [i, j-1].

Si le vecteur P̅_̅{̅c̅}̅P̅ₖ̅ n'est proche d'aucun des premier et second vecteurs directeurs ou de leurs opposés, le point voisin Pₖ n'est pas indexé.

Le critère de proximité est par exemple un pourcentage Δ ajustable sur la valeur de S1 ou de S2.

En variante, d'autres critères de proximité peuvent être utilisés comme rechercher si le point voisin est à l'intérieur d'un cercle de diamètre prédéfini autour d'un point résultant d'une translation selon le vecteur I̅, le vecteur -I̅, le vecteur J̅, ou le vecteur -J̅ du point central P_{c}.

Si le point voisin Pₖ reçoit une indexation, il est enregistré dans la liste Lₘ des points indexés à l'itération m.

A l'étape 154, le point voisin suivant de la liste des points voisins du point central P_{c} est sélectionné pour réaliser les étapes 148 à152, à moins que tous les points voisins de cette liste n'aient été passés en revue, et, dans ce cas la procédure passe à l'étape 156.

A l'étape 156, un autre point de la liste Lₘ₋₁ des points indexés à l'itération précédente est sélectionné comme nouveau point central pour application des étapes 146 à 154, à moins que tous les points de la liste Lₘ₋₁ n'aient été passés en revue, et dans ce cas la procédure passe à l'étape 158.

A l'étape 158, on incrémente l'entier m d'une unité et on vérifie si la liste des points indexés à l'étape précédente Lₘ₋₁ est vide. Dans la négative, le procédé est itéré depuis l'étape 143.

Dans la négative, on considère que l'ensemble des N points du fichier de points a été indexé.

L'étape d'indexation automatique est donc terminée.

En variante, l'algorithme précédent est simplifié en mettant en oeuvre des appels imbriqués de fonctions, qui permettent de substituer aux étapes 143 et 144 et aux boucles associées, la sortie de l'algorithme s'opérant d'elle-même lorsqu'il n'y a plus de points à traiter.

L'étape d'indexation 140 est par exemple illustrée sur la figure 4 pour la première itération, m=1.

La liste des points indexés à l'itération précédente, L₀, contient le seul point origine. Le point origine est alors sélectionné comme point central.

La liste des points voisins du point P₀ est constituée des points P₁₁, P₁₂, P₁₃, P₁₄ et P₁₅ effectivement reliés au point P_{C}.

On considère successivement chacun de ces points voisins :
Le point P₁₁ étant sensiblement aligné avec le premier vecteur directeur I̅, il est indexé par la paire [1,0].
Le point P₁₂ formant un angle d'environ 45° avec le premier vecteur directeur I̅ et l'opposé du second directeur J̅, il n'est pas indexé.
Le point P₁₃ étant sensiblement aligné avec l'opposé du second directeur vecteur J, il est indexé par la paire [0,-1].
Le point P₁₄ étant sensiblement aligné avec l'opposé du premier directeur vecteur Î, il est indexé par la paire [-1,0].
Le point P₁₅ formant un angle d'environ 45° avec l'opposé du premier vecteur directeur I̅, et le second directeur J, il n'est pas indexé.

Ainsi, à l'itération m=1, les points P₁₁, P₁₃ et P₁₄ ont été indexés.

La procédure passe alors à une seconde itération m=2. Les points P₁₁, P₁₃ et P₁₄ sont successivement sélectionnés comme point central.

La recherche des voisins du point P₁₁ considéré comme point central permet d'accéder au point P₂₁ pour l'indexer, mais également au point P₁₂ (rejeté lors de la première itération) pour l'indexer...

De proche en proche, chaque point du plan est indexé.

A l'issue de la mise en oeuvre du procédé, un tableau de points indexés est obtenu, dans lequel chaque point possède, en plus d'un identifiant et d'une position dans le plan XY, une paire d'identifiants. Ce tableau est avantageusement mémorisé dans un fichier de points indexés.

La procédure venant d'être présentée peut avantageusement être appliquée aux images d'un même échantillon alors qu'il est par exemple soumis à des contraintes mécaniques différentes. Les différents fichiers de points indexés obtenus peuvent alors être comparés et la position d'un point correctement indexé du milieu cristallin peut être suivie d'un fichier à l'autre.

### Variantes

Si l'étape 130 de transformation géométrique est omise, l'étape d'indexation s'applique mais en considérant les vecteurs A, B au lieu des vecteurs I,J.

Le présent procédé d'indexation s'applique à un fichier de point non pas à deux dimensions, mais à trois dimension. Un tel fichier peut être obtenu par l'empilement selon une troisième direction de fichiers de points à deux dimension. Un tel fichier peut être obtenu par des techniques d'imagerie permettant d'observer non seulement le plan de coupe formant la surface de l'échantillon analysé, mais également les plans situés derrière le plan de coupe, sur une certaine profondeur.

Le présent procédé peut être mis en oeuvre par un ordinateur convenablement programmé par un programme d'ordinateur adapté, tout au moins pour réaliser les étapes une fois acquise l'image de la structure cristalline.

### Avantages

Le présent procédé constitue une approche simple autorisant une indexation rapide. La connectivité entre noeuds permet de réduire l'espace de recherche des atomes voisins de façon drastique, ayant un coût algorithmique linéaire en n, de l'ordre de -6n en 2D.

Outre son coût de calcul réduit, cette approche parvient à gérer correctement les irrégularités de mailles, notamment en bordure de l'échantillon. L'absence d'un atome dans le réseau n'est pas préjudiciable à la bonne indexation avec cette approche.

Le présent procédé ne nécessite pas de connaissances a priori sur la structure cristallographique.

Il évite d'avoir à passer dans l'espace de Fourrier pour la détermination des paramètres de mailles avant de réaliser l'indexation proprement dite.

## Revendications

1. Procédé d'indexation (100) des motifs atomiques d'une structure cristalline, **caractérisé en ce que** le procédé comprend les étapes :
- d'acquisition (104) d'une image (10) de la structure cristalline, ladite image représentant une pluralité de motifs atomiques ;
- de traitement (108) de l'image acquise pour obtenir un ensemble de points, chaque point (Pₙ) de l'ensemble de points étant associé à un motif atomique de l'image acquise et chaque point de l'ensemble de points étant localisé dans un repère de référence ;
- d'application (110) d'un algorithme de triangulation à l'ensemble de points pour obtenir un maillage triangulaire, chaque sommet d'un triangle (Tₙ) du maillage triangulaire étant un point de l'ensemble de points, un point particulier de l'ensemble de points étant connecté à un point dit voisin dudit point particulier par un côté d'un triangle ;
- de détermination des vecteurs directeurs (A̅, B̅) de la structure cristalline à partir des propriétés des triangles du maillage triangulaire, un vecteur directeur définissant une direction principale de la structure cristalline, un indice étant associé à chaque direction principale ; et,
- d'indexation (140) de chaque point de l'ensemble de points, par itérations successives à partir d'un point sélectionné comme point origine (P₀) et dont les indices selon chacune des directions principales sont nuls, en sélectionnant un point indexé à l'itération précédente comme point central (P_{c}), en vérifiant si un point voisin (Pₖ) dudit point central correspond à une translation du point central selon un vecteur de translation égal à l'un des vecteurs directeurs, respectivement à l'un de leurs opposés, et, dans l'affirmative, incrémenter, respectivement décrémenter, l'indice du point central selon la direction principale associée au vecteur de translation pour indexer ledit point voisin à partir des indices du point central.

2. Procédé selon la revendication 1, dans lequel l'algorithme de triangulation est un algorithme de triangulation de Delaunay.

3. Procédé selon la revendication 1 ou la revendication 2, dans lequel l'étape de détermination des vecteurs directeurs de la structure cristalline à partir des propriétés des triangles du maillage triangulaire comporte l'application d'un traitement statistique sur les angles et les longueurs des triangles du maillage triangulaire.

4. Procédé selon la revendication 3, dans lequel le traitement statistique comporte une estimation des angles des vecteurs directeurs à partir d'un histogramme des angles de chaque côté des triangles du maillage triangulaire, puis une estimation de la longueur de chaque vecteur directeur à partir d'un histogramme des longueurs de chaque côté des triangles du maillage triangulaire dont les angles sont proches de l'angle estimé pour le vecteur directeur considéré.

5. Procédé selon l'une quelconque des revendications précédentes, comportant en outre une étape (130) d'application, sur l'ensemble de points, d'une transformation géométrique permettant de passer d'un repère défini par les vecteurs directeurs (A̅, B̅) de la structure cristalline à un repère défini par des vecteurs orthonormés (I̅, J̅), afin d'obtenir un ensemble de points transformés.

6. Procédé selon l'une quelconque des revendications précédentes, dans lequel un point d'un ensemble de points est **caractérisé par** un identifiant unique, une pluralité de coordonnées spatiales, et, à l'issue de la mise en oeuvre du procédé d'indexation, une pluralité d'indices.

7. Procédé selon l'une quelconque des revendications précédentes, dans lequel tous les points de l'ensemble de points appartiennent à un même plan (XY), la structure cristalline possédant deux directions principales, c'est-à-dire deux vecteurs directeurs.

8. Procédé d'indexation selon l'une quelconque des revendications précédentes, **caractérisé en ce que** l'étape consistant à traiter l'image acquise s'effectue par application d'un traitement de correspondance de modèle permettant d'obtenir une valeur de corrélation entre l'image acquise (10) et une vignette (12) représentative d'un motif atomique pour différentes positions relatives de la vignette sur l'image acquise, chaque maximum local de la valeur de corrélation correspondant à un point de l'ensemble de points.

9. Procédé d'indexation selon l'une quelconque des revendications précédentes, dans lequel l'acquisition de l'image (10) s'effectue par microscopie électronique par transmission (HAADF, STEM, EDS, EDX, EELS) ou par microscopie à effet tunnel (STM).

10. Produit programme d'ordinateur comportant des instructions logicielles qui, lorsqu'elles sont exécutées par un ordinateur muni de moyens d'acquisition d'une image de structure cristalline, mettent en oeuvre un procédé d'indexation selon l'une quelconque des revendications précédentes.

## Patentansprüche

1. Verfahren zum Indizieren (100) atomarer Muster einer Kristallstruktur, **dadurch gekennzeichnet, dass** das Verfahren die folgenden Schritte umfasst:
- Erfassen (104) eines Bilds (10) der Kristallstruktur, wobei das Bild eine Vielzahl atomarer Mustern darstellt;
- Verarbeiten (108) des erfassten Bilds, um eine Punkteinheit zu erlangen, wobei jeder Punkt (Pₙ) der Punkteinheit mit einem atomaren Muster des erfassten Bilds assoziiert ist und sich jeder Punkt der Punkteinheit in einem Bezugssystem befindet;
- Anwenden (110) eines Triangulierungsalgorithmus auf die Punkteinheit, um ein Dreiecksnetz zu erlangen, wobei jeder Scheitelpunkt eines Dreiecks (Tₙ) des Dreiecksnetzes ein Punkt der Punkteinheit ist, wobei ein jeweiliger Punkt der Punkteinheit durch eine Seite eines Dreiecks mit einem sogenannten Nachbarpunkt des jeweiligen Punkts verbunden ist;
- bestimmen von Richtungsvektoren (A̅, B̅) der Kristallstruktur anhand der Eigenschaften der Dreiecke des Dreiecksnetzes, wobei ein Richtungsvektor eine Hauptrichtung der Kristallstruktur definiert, wobei mit jeder Hauptrichtung ein Index assoziiert ist; und
- Indexieren (140) von jedem Punkt der Punkteinheit durch aufeinanderfolgende Iterationen anhand eines Punkts, der als Ursprungspunkt (P₀) ausgewählt wird und dessen Indizes gemäß jeder der Hauptrichtungen null sind, durch Auswählen eines Punkts, der bei der vorherigen Iteration als Mittelpunkt (P_{c}) indiziert wurde, indem überprüft wird, ob ein benachbarter Punkt (Pₖ) des genannten Mittelpunkts einer Translation des Mittelpunkts gemäß einem Translationsvektor entspricht, der gleich wie einer der Richtungsvektoren bzw. einer ihrer Gegensätze ist, und, wenn ja, Inkrementieren bzw. Dekrementieren des Index des Mittelpunkts entlang der Hauptrichtung, die mit dem Translationsvektor assoziiert ist, um den Nachbarpunkt anhand der Indizes des Mittelpunkts zu indizieren.

2. Verfahren nach Anspruch 1, wobei der Triangulierungsalgorithmus ein Delaunay-Triangulierungsalgorithmus ist.

3. Verfahren nach Anspruch 1 oder Anspruch 2, wobei der Schritt eines Bestimmens der Richtungsvektoren der Kristallstruktur anhand der Eigenschaften der Dreiecke des Dreiecksnetzes das Anwenden einer statistischen Verarbeitung auf die Winkel und Längen der Dreiecke des Dreiecksnetzes umfasst.

4. Verfahren nach Anspruch 3, wobei die statistische Verarbeitung ein Schätzen von Winkeln von Leitvektoren anhand eines Histogramms von Winkeln jeder Seite der Dreiecke des Dreiecksnetzes und dann ein Schätzen der Länge von jedem Leitvektor anhand eines Histogramms der Längen von jeder Seite der Dreiecke des Dreiecksnetzes, deren Winkel nahe dem geschätzten Winkel für den betrachteten Leitvektor sind, umfasst.

5. Verfahren nach einem der vorherigen Ansprüche, ferner umfassend einen Schritt (130) eines Anwendens einer geometrischen Transformation auf die Punkteinheit, die es ermöglicht, von einem durch die Richtungsvektoren (A̅, B̅) der Kristallstruktur definierten Koordinatensystem zu einem durch orthonormierte Vektoren (I̅, J̅) definierten Koordinatensystem überzugehen, um eine transformierte Punkteinheit zu erlangen.

6. Verfahren nach einem der vorherigen Ansprüche, wobei ein Punkt einer Punkteinheit durch eine eindeutige Kennung, eine Vielzahl von Raumkoordinaten und, nach Durchführung des Indexierungsverfahrens, eine Vielzahl von Indizes gekennzeichnet ist.

7. Verfahren nach einem der vorherigen Ansprüche, wobei alle Punkte der Punkteinheit zu einer einzigen Ebene (XY) gehören, wobei die Kristallstruktur zwei Hauptrichtungen, das heißt zwei Richtungsvektoren, besitzt.

8. Indexierungsverfahren nach einem der vorherigen Ansprüche, **dadurch gekennzeichnet, dass** der Schritt, der darin besteht, das erfasste Bild zu verarbeiten, durch Anwenden einer Modellentsprechungsverarbeitung erfolgt, die es ermöglicht, einen Korrelationswert zwischen dem erfassten Bild (10) und einer Vignette (12), die repräsentativ für ein atomares Muster ist, für verschiedene relative Positionen der Vignette auf dem erfassten Bild zu erlangen, wobei jedes lokale Maximum des Korrelationswerts einem Punkt der Punkteinheit entspricht.

9. Indexierungsverfahren nach einem der vorherigen Ansprüche, wobei die Erfassung des Bilds (10) durch Transmissionselektronenmikroskopie (HAADF, STEM, EDS, EDX, EELS) oder durch Rastertunnelmikroskopie (STM) erfolgt.

10. Computerprogrammprodukt, umfassend Softwareanweisungen, die, wenn sie von einem Computer ausgeführt werden, der mit Einrichtungen zum Erfassen eines Bilds einer Kristallstruktur versehen ist, ein Indexierungsverfahren nach einem der vorherigen Ansprüche implementieren.

## Claims

1. A method of indexing (100) atomic units of a crystal structure, **characterized in that** the method comprises the steps of:
- acquiring (104) an image (10) of the crystal structure, the image representing a plurality of atomic patterns;
- processing (108) the acquired image to obtain a set of points, each point (Pₙ) of the set of points being associated with an atomic pattern of the acquired image and each point of the set of points being located in a reference coordinate frame;
- application (110) of a triangulation algorithm to the set of points to obtain a triangular mesh, each vertex of a triangle (Tₙ) of the triangular mesh being a point of the set of points, a particular point of the set of points being linked to a so-called adjacent point by one side of a triangle;
- determination of the direction vectors (A̅, B̅) of the crystal structure from the properties of the triangles of the triangular mesh, a direction vector defining a main direction of the crystal structure, an index being associated with each main direction; and,
- indexing (140) of each point of the set of points, by successive iterations starting from a point selected as the origin point (P₀) and whose indices along each of the main directions are zero, by selecting a point indexed at the preceding iteration as the central point (P_{c}), by checking whether a neighbor point (Pₖ) of said central point corresponds to a translation of the central point according to a translation vector equal to one of the direction vectors, or one of the opposite vectors thereof, and, if so, incrementing or decrementing, respectively, the index of the central point along the main direction associated with the translation vector so as to index said neighbor point from the indices of the central point.

2. The method according to claim 1, wherein the triangulation algorithm is a Delaunay triangulation algorithm.

3. The method according to claim 1 or claim 2, wherein the step of determining the direction vectors of the crystal structure from the properties of the triangles of the triangular mesh includes the application of a statistical processing to the angles and the lengths of the triangles of the triangular mesh.

4. The method according to claim 3, wherein the statistical processing includes an estimation of the angles of the direction vectors from a histogram of the angles on each side of the triangles of the triangular mesh, then an estimation of the length of each direction vector from a histogram of the lengths of each side of the triangles of the triangular mesh the angles of which are close to the estimated angle for the direction vector considered.

5. The method according to one of the preceding claims, further including a step (130) of applying, on the set of points, a geometrical transformation for changing from a coordinate frame defined by the direction vectors (A̅, B̅) of the crystal structure to a coordinate frame defined by orthonormal vectors (I̅,J̅), in order to obtain a set of transformed points.

6. The method according to any of the preceding claims, wherein a point of a set of points is **characterized by** a unique identifier, a plurality of spatial coordinates, and, after the implementation of the indexing method, a plurality of indices.

7. The method according to any of the preceding claims, in which all the points of the set of points belong to the same plane (XY), the crystal structure having two main directions, i.e. two direction vectors.

8. The indexing method according to any one of the preceding claims, **characterized in that** the step consisting in processing the acquired image is carried out by applying a pattern matching processing for obtaining a correlation value between the acquired image (10) and a thumbnail (12) representative of an atomic pattern for different relative positions of the thumbnail on the acquired image, each local maximum of the correlation value corresponding to a point of the set of points.

9. The indexing method according to any of the preceding claims, wherein the acquisition of the image (10) is carried out by transmission electron microscopy (HAADF, STEM, EDS, EDX, EELS) or by scanning tunneling microscopy (STM).

10. A computer program product including software instructions which, when executed by a computer provided with means of acquisition of a crystal structure, implement an indexing method according to any of the preceding claims.
